# EUROPEAN PATENT SPECIFICATION

(11) **EP 3 390 960 B1**
(45) Date of publication and mention of the grant of the patent: **06.11.2019**
(21) Application number: 18708569.1
(22) Date of filing: 02.01.2018
(51) Int. Cl.: G01B 11/24, G21C 17/00

(54) **SCANNING DEVICE AND METHOD FOR MEASUREMENT AND ANALYSIS OF CIRCULAR HOLES IN TRANSPARENT LIQUIDS IN IONIZING RADIATION ENVIRONMENT**
SCANVORRICHTUNG UND VERFAHREN ZUR MESSUNG UND ANALYSE VON RUNDEN LÖCHERN IN TRANSPARENTEN FLÜSSIGKEITEN IN EINER IONISIERENDEN STRAHLUNGSUMGEBUNG
DISPOSITIF DE BALAYAGE ET PROCÉDÉ DE MESURE ET D'ANALYSE DE TROUS CIRCULAIRES DANS DES LIQUIDES TRANSPARENTS DANS UN ENVIRONNEMENT DE RAYONNEMENT IONISANT

(30) Priority: 31.12.2016 CZ 20160845
(43) Date of publication of application: 24.10.2018
(73) Proprietor: Vysoká Skola Bánská - Technická Univerzita Ostrava, 70800 Ostrava-Poruba (CZ)
(72) Inventor: FOJTIK, David, 747 14 Markvartovice (CZ); MIHOLA, Milan, 70800 Ostrava - Poruba (CZ); PODESVA, Petr, 70030 Ostrava - Vyskovice (CZ); HRABOVSKY, Miroslav, 77900 Olomouc (CZ); IVANOV, Georgi, 77900 Olomouc (CZ); CERNAVA, Petr, 73564 Havirov Prostredni Sucha (CZ)
(74) Representative: Kendereski, Dusan
(86) International application number: PCT/CZ2018/050001
(87) International publication number: WO 2018/121805

(56) References cited:
- US-A- 6 064 708
- US-A1- 2009 180 110

## Description

### Technical Field

The invention relates to a scanning device and a method for contactless detailed scanning of the internal areas of the holes of a particularly circular cross-section for a detailed analysis of state and dimensions of such holes, for example apertures, on an object, for example a bottom of a nuclear reactor shaft located in a transparent liquid, which can be otherwise optically unknown, with high **ionizing radiation** and which may be characterized by a pressure lower or higher than atmospheric pressure.

### Prior Art

Contact or contactless methods and gauges are used for measuring and evaluating the state of internal areas of holes with a circular cross-section.

The first group consists of methods based on applying or opening adjustable elements of mechanical gauges, by which a contact with measured area of a specified predetermined force in a specified number of locations occurs. Depending on the retraction or opening rate, the designated average is determined. Such gauges include cavity micrometers, limit calipers, calipers, etc. Change of the adjustable parts can be scanned electrically with a possibility of result archiving. A disadvantage of said method is that the gauges assume an ideal ovality (circularity) of the given hole, they cannot obtain detailed state of the hole.

This problem is successfully solved by coordinate-measuring machines. The problem of these machines lies in high costs, large dimensions, long measurement time, high service intensity, accessibility of the measured objects and operation environment that corresponds to laboratory conditions.

The common advantage of contact methods is relatively low costs and high accuracy of measurements up to the micrometer range, but this accuracy depends on the precision of the gauge operator.

The common disadvantage of contact methods is the necessity of the contact which requires certain size of contact areas and compressive force, which affects the measured surface and the detail of the scanning. Another major disadvantage is the fact that most contact scanners cannot function in liquids because mechanical or electronic parts would be damaged due to a problematic sealing of movable parts.

The second group consists of contactless measurement methods, usually based on optical methods. These include:

### 1. Shadow measurement method

It is based on the principle of detecting the edge of a shadow cast by an object or by a hole edge. In this method, a transducer (transmitter) with a parallel light beam with a planar wave-plane and a transceiver (receiver) evaluating the incident beams from the transmitter are placed against each other. There is a hole located between them so that its axis lies on the plane of the wave-plane parallel to the direction of the beams. The light passes only through the hole and impinges the receiver. The receiver is usually a line receiver and evaluates the length of the illuminated part. The size of the light band is the measured diameter. The advantage of this method is the high accuracy of the line receiver, which reaches up to micrometer units in the laboratory conditions.

Another variation is a matrix scanner receiving a two-dimensional image. The most commonly used configuration is based on a lumen of the hole when the light source is aligned with the camera axis, located on the opposite side of the measured hole. This makes the edge detection more accurate, but the method allows measuring only of the edge with the smallest bore. The basic requirement therefore lies in placing the light source on the opposite side of the object, which may not be physically possible.

The disadvantage in both cases is the limited applicability of the method only to through holes with sufficient space in front of and behind the hole to position the transmitter and the receiver, which generally has to exceed the dimensions of the hole. Moreover, the method cannot scan the shape of the internal area, only the smallest diameter is obtained over the entire length of the hole. The method is therefore not suitable for deep holes with variable cross-section. Another disadvantage is the sensitivity of the receiver to gamma radiation.

### 2. Shadow methods based on light intensity measurement

This method is based on measurement of the intensity of light passing through the hole. The measuring system is simple but allows to measure only the area of the hole, not its dimensions, and it is used for holes of a smaller diameter. It requires a light source located in the axial axis of the hole against the photosensitive scanning element so that the light passes through the hole to the scanning element. It can be used in combination with a reference object serving as a screen, such as a sphere located in the hole. A modification of this method involves using multiple light sources in different positions at different angles, which allows partial analysis of the hole shape at the expense of longer measurement time and more complex construction.

### 3. Dimension measuring by processing the image of the inlet hole

This method is based on the evaluation of the image obtained from the camera located at a suitable distance in the axis above the measured hole. The camera lens must be focused at this distance. By increasing the contrast, the edges and transitions are highlighted, and the selected hole outline is determined. The required hole dimensions are then determined from the obtained outline.

The measurement accuracy is affected by the camera resolution, its position relative to the hole axis, lens quality and also substantially by light quality. To obtain a high-quality image, a fast lens is required, with a low depth of field and no undefined optical defects which deform the image and cannot be compensated for additionally. Measurement of holes with a vaguely defined, non-sharp edge is problematic. Inclined and rounded edges are especially difficult to define precisely, due to the refraction of light on the edge, reflections and shadows. Systems with multiple light sources, multiple cameras or both are used to compensate for problems caused by the light.

The shape of the internal area cannot be obtained by the method, only the common smallest bore over the entire length of the hole and the outer outline are obtained. The method is not suitable for deep holes with variable cross-section.

### 4. Confocal scanner measurement

This is a method where the polychromatic light is dispersed to monochromatic one by means of an optical lens assembly so that the light of different wavelengths is focused at different distance. The light reflected from the surface is characterized by change in the color spectrum, which makes it possible to determine distance with accuracy in nanometer range. There are versions for axial measurement but also for radial measurement, which is suitable for accurate dimension measurement of the holes of small diameter.

The disadvantage lies in sensitivity to environment cleanliness and especially in very limited working range. The scanner or scanners are then used for single or multipoint measurements or for continuous scanning, if the assembly rotation along the axial axis of the object is enabled or if the object rotates by itself.

These scanners are widely used for measurements of the internal diameters, under the condition that the variability of the measured diameters is within millimeters and therefore the measuring system can be adapted to these dimensions, or that it includes a micrometric shift (manual or motorized) which allows the assembly to adapt to the given dimension.

Additionally, the scanner requires connection to an evaluation unit via optical cable which is not resistant to radiation changing the optical properties of the cable material over time. Thus, changes in the spectrum of transmitted light, to which this method is very sensitive, would occur.

Market offers a confocal scanner with rotating scanning head and external shift for vertical axis movement for scanning of the hole profiles with high precision and low working range, which, however, cannot be used in an environment with a high level of ionizing radiation and which is intended for dry operation.

### 5. Laser profilometers with radial beam projection

This is a method based on a collimation of the laser beam incident on a conical mirror tip, on a beam position monitoring by at least one camera with wide-angle lens, and on determination of dimensions by triangulation method based on the image processing. The beam is upon impingement transformed into a planar projection perpendicular to the axis of the measuring assembly consisting of the laser emitter and camera. The assembly must be adapted to the measured diameter so that the projected beam is visible by the camera. This requires a compromise between the lens width and the distance of the camera from the projection plane. As the width of the lens increases, its optical properties deteriorate and the accuracy decreases.

The disadvantage of this method lies in the computational complexity, higher laser power compared to the point by point measurement and, in particular, lower accuracy in comparison to the scanning by the single-point triangulation scanner or the confocal scanner, especially on the surfaces with inconsistent reflectivity.

There are spectral laser interferometric scanners available on the market which are intended for precise scanning of the internal profile of hole or pipe by means of a rotating head or a triaxial shift, designated for dry (laboratory) operation which cannot be used in high radiation environment. The high accuracy of such device is achieved at the expense of small working range.

The disadvantage of the above-mentioned contactless devices is the impossibility of their usage in the **ionizing radiation** environment to which especially the unprotected electronics of the existing devices is sensitive, furthermore, these devices are not designed for environment with liquid of higher than atmospheric pressure. Therefore, only mechanical contact gauges are currently used for the analysis of state and dimensions of these holes, for example apertures in the bottom of the nuclear reactor shafts, thus in a liquid environment with an overpressure with **ionizing radiation.**

It is further known from US 2009/0180110 A1 to optically measure circular holes in radioactive environment wherein the measuring head is sealed against liquid and provided with compressed air. Moreover, in US 6 064 708 A a scanning device is used for measurement and analysis of a circular manhole in an ionizing radiation environment in a transparent liquid. The device comprises a rotatable measuring head with camera and housing, and a laser range finder. The housing is impermeably sealed against ambient liquid, and the pressure in the housing is kept high by providing pumped gas.

### Summary of the Invention

The above-mentioned disadvantages are to some extent removed by a scanning device (not claimed) and a method for measurement and analysis of circular holes in ionizing radiation environment in transparent liquid, which are described below in the specification. The features of the method according to the invention are defined in the appended claims.

In particular, it is a contactless scanning device and a method for a detailed scanning of the internal areas of the holes, especially of a circular cross-section, in a transparent but otherwise optically unknown environment with liquid under overpressure or underpressure, which may contain a source of ionizing radiation, for detailed analysis of the state of the hole, including dimension determination. The scanning device is particularly suitable for the analysis of holes with diameter of 30 to 2000 mm with accuracy of up to ± 0.05 mm.

The scanning device uses the principle of a laser triangulation rangefinder which it expands with indirect optics, wherein the laser beam pathway is optically adjusted so that the laser beam is within the measured range relative to the scanned site of the internal area in a suitable position (the position that ensures the required measurement accuracy), wherein the source and the evaluation element of the reflected laser beam position may be located outside the confined space or alternatively in a position that prevents the direct impact of ionizing radiation from the surroundings back to the laser triangulation rangefinder, and so that it is possible to place an opaque absorption material (lead, stainless steel, steel, etc.) between the ionizing radiation source and the sensitive elements of the optical assembly, which reduces the radiation level below the critical level while maintaining the optimum impact of the laser beam on the measured surface.

At the same time, the optical assembly changes its position relative to the hole by combination of or one of the motions: rotating about or shifting along the axis of the hole. the aim of the positioning is to cover the measured internal area of the scanned hole in the desired range. The rotation angle and shift size are known (usually are independently measured), so that the position and orientation of the laser beam are fully known. It is possible to evaluate the distance of the beam reflection area from the measured area relative to the rotation axis in each position. From the information about the rotation angle and the extension size, the position of the reflection points in the space are calculated.

The actual measurement is performed by an automatic point by point scanning during the rotation of the measuring head to cover the entire internal area of the hole, thereby obtaining scanned internal profile of the hole in a cross-section. Repeated measurement with simultaneous change in the measuring head position (extension, rotation) in a spiral or in cross-sections, depending on the continuity of the individual movements, gives a quantum of points representing the scanned surface of the hole. Point density depends on the selected sample measurement frequency and on the speed of position change. These parameters may be optional or fixed, but in all circumstances known with sufficient precision. The measuring head is equipped with at least one optical assembly. To increase accuracy and increase the scanning speed, multiple optical assemblies might be used simultaneously. The dimensions and shape of the hole are then evaluated from the scanned quantum of points, either separately in individual layers of parallel scans representing partial cross-sections of the hole, or in 3D from the entire scanned portion of the model hole. The measuring head always scans the entire profile in any resolution, which can be selected by changing the rotation speed and sample measurement frequency.

Inaccuracy of rotational and sliding movement along with measurement deviation caused by unknown optical properties of the environment can be eliminated by calibration. For this purpose, a detachable or integrated caliber of cylindrical shape with at least one measurable area (with at least two cascade gradient internal diameters), which is in the known position of the measuring range, is used. Caliber dimensions are known with sufficient precision (usually they are independently measured with higher accuracy than the required measurement accuracy).

The caliber is placed in the prescribed position or the rotating and sliding optical assembly is placed in a precisely manufactured caliber in the measurable range so that the rotational axis is identical with the caliber axis, and all the gradient diameters are reachable by the sliding mechanism of the optical assembly and every internal area thereof in the fixed rotation angle is scanned, thereby obtaining the referential data. For each angle, a set of measured distances corresponding to the radius of the individual gradient caliber diameters is obtained. An individual correction equation of the dependence of the measured radius on the obtained value from the laser triangulation rangefinder and the rotation angle of the optical assembly is obtained from the set of measured radii and known caliber dimensions for each defined rotation angle of the optical assembly by the approximation method. From the set of coordinates of the cross-sectional centers of the measured cylindrical areas of the caliber, the dependence of the optical assembly offset on its shift rate is obtained from the correction equation. Correction equations of the curves (non-linearity measurements equations in the given environment) are applied to the measured hole points. Caliber measurement is carried out in the same ambient environment as the measured holes. The caliber can be integrated into the measuring device or detachable.

The optical measuring assembly of the scanning device including optoelectronics is enclosed in a durable housing which:
1) prevents liquid of the ambient environment from entering the device,
2) protects the device from mechanical damage,
3) provides an interface for attachment to a handling device.

The scanning device which is intended for the ionizing radiation environment, has a housing made of materials which protect the internal elements of the device from the effects of ionizing radiation. Walls of the housing serve as an absorption layer which reduces gamma radiation level, which has a negative effect on the accuracy and reliability of the device. Exposed indirect optical elements are also made of radiation-resistant materials which do not change their properties under the effect of ionizing radiation.

The delicate parts (a source, a reflected laser beam receiver and optionally an indirect optics) of the optical assembly are enclosed in a watertight housing with a window through which the laser beam passes from/into the external environment where it reflects from the measured area. To prevent liquid penetration and at the same time to eliminate window deformation (occurrence of an unknown light refraction in the window) due to the difference in the external and internal pressure, a pressure equal to or higher than the ambient pressure is maintained within the housing.

The scanning device can comprise a means for rotation of the measuring head around the hole axis or a means for longitudinal shift of the measuring head along the hole axis or both means simultaneously. In such case, the scanning unit consists of the measuring head, the means enabling movement of the measuring head and the housing. The housing is attached to the manipulator. The optical assembly is located inside the measuring head, including windows separating the internal and external space of the measuring head.

The scanning device may include mechanical guiding and fixation elements which help to introduce the device into the measured holes or optionally to keep the measuring device in the desired position.

If the scanning device does not contain the integrated means enabling the desired movement, it is possible to perform this movement with the external positioning device attached to the scanning unit. In the absence of the integrated means for both movements, the housing itself is a measuring head.

Equal or higher pressure than the ambient pressure is maintained in the housing. This prevents the liquid from entering the internal space of the housing and deformation of the sensitive parts of the measuring unit due to different pressures.

The operator's workstation is separated from the measuring device.

The actual measurement has three steps.
1) After the caliber is connected (if it is not an integral part of the device) and the scanner is inserted into the ambient environment of the measured hole, the calibration is performed in order to obtain correction data. If the caliber is an integral part of the scanning device, the full or control calibration can be repeated before each scanning of the hole.
2) After positioning the device in the working position with respect to the hole, the measuring head is extended into the initial scanning position and performs the scanning of the desired portion of the hole while rotating and optionally longitudinally shifting.
3) The scanned data are corrected based on the calibration data, and subsequently hole dimensions or optionally other required parameters are evaluated. Data and calculated data may be archived, visualized or otherwise processed.

A method (not claimed) of contactless scanning and hole dimensions evaluation by triangulation indirect optical method specifically comprises the following steps:
- At least one laser triangulation rangefinder is expanded with indirect optics which changes the pathway of the laser beam at least once so that it is within the measured range in the optimized position (perpendicular to the area) relative to the scanned site of the internal area, wherein the source and the evaluation element of the position of the reflected laser beam may be located outside the defined space.
- At least one optical assembly rotates around and moves along the axis of the scanned hole so that it is possible to cover the entire internal area of the hole. The rotation angle and shift size are measured independently (absolutely or relatively to the initial position) so that the position and orientation of the laser beam is fully known. In each position, it is possible to evaluate the distance of the beam reflection site from the measured area relative to the rotation axis.
- Repeated measuring while simultaneously changing the position of the extension and rotation results in a point cloud (in spiral or in cross-sections, depending on the continuity of the individual movements) representing the scanned surface of the hole. Point density depends on the selected sample measurement frequency and the speed of the position change.
- Each scanned point is recalculated using the correction equations obtained by the calibration.
- The hole dimensions are evaluated either separately in individual layers of parallel scans representing partial cross-sections of the hole, or in 3D from the entire scanned portion of the hole shape, from the scanned and corrected point cloud.

The features of the method according to the invention are defined in claim 1.

The main advantage of the scanning device is the ability to scan the internal areas of the holes in detail with high-precision analysis of the state of the hole, including measurements with an accuracy of ± 0.05 mm in liquids with overpressure in high radiation environment. The measurement may take place in liquids at large depths, wherein the optical properties of these liquids do not have to be known. The system further enables custom calibration for a work in an optically unknown environment and rinse of the scanning head surroundings for removal of impurities in the measurement area. The scanning device accuracy depends on the optical assembly resolution and on the selected measuring range. Simple optical elements of indirect optics (planar mirror, planar window glass) have an insignificant effect on the accuracy of the measurement in the full extent.

The contactless scanning method presents an advantage because it is not dependent on the mechanical properties of the measured material and it can also scan the surface with high precision and resolution, which enables evaluation of the hole dimensions with precision up to ± 0.05 mm.

An advantage over the camera system is the guarantee of higher accuracy and faster evaluation of the measured profile, wherein the scanning method according to the invention is not dependent on the ambient light quality. Compared to systems based on the shadow method, it allows the measurement of holes with access only from one side and it is spatially less demanding.

Another advantage is that the actual scanning takes place completely automatically, which enables the operator to be at a safe distance from the source of ionizing radiation.

A detailed 3D computer model of the hole (or 2D cross-sections of the holes) can be created from the scanned data, which can then be visualized, analyzed or otherwise processed, even automatically with the use of computer technology.

The scanning device is not service-intensive and does not require exact positioning of the scanning device in the hole. Eventual deviations caused by inaccurate positioning of the scanning device can be eliminated by processing the 3D model.

### Description of Drawings

The summary of the invention is further described by means of accompanying drawings where:
fig. 1 schematically shows the aperture and the scanning device with the integrated means for measuring head rotation and the integrated means for longitudinal shift
fig. 2 is a detail of the aperture and detail of the front portion of the scanning device with measuring head and the means for measuring head rotation with electric motor of the means for rotation
fig. 3 is a detail of the rear portion of the scanning device with the means for longitudinal shift of the measuring head and a rear cover
fig. 4 shows the measuring head with double optical assembly
fig. 5 shows the measuring head attachable to the external means for rotation and longitudinal shift
fig. 6 shows the measuring head with integrated means for rotation attachable to the external means for longitudinal shift

### Embodiments of the Invention

These embodiments illustrate the invention, however, have no limiting effect on the scope of the protection.

The method for measurement and analysis of circular holes in ionizing radiation environment in transparent liquid and a device for performing such method, is as an example, utilized for evaluation of the state of 314 apertures of the bottom of the VVER 440 type nuclear reactors shaft, where the diameter, ovality and flow area of the critical part of the apertures are evaluated. VVER-440 is the most widely used type of nuclear pressurized water reactor in Eastern Europe and Russia. Most of these reactors have been in operation for over 20 years. The original lifetime has been estimated for over 30 years. An understandable effort of all operators is to maximize the life expectancy.

In the top plate of the reactor shaft bottom, there are 314 apertures of Ø50 H8 nominal diameter symmetrically spaced around the fuel rod holes. Through these apertures, heated water (about 300 °C) flows to steam generators. The apertures are used to adjust the water flow to ensure a uniform cooling of the fuel rods with an operational tolerance of up to 1 ° C.

Due to the long-term operation, the apertures are gradually clogged by magnetite, which reduces their internal diameter (bore). This results in temperature differences around the fuel rods up to several ° C. These differences subsequently do not allow the use of fuel rods in the full extent of their power. Moreover, bigger differences threaten the reactor operation.

The purpose of the measurement is to determine the state and degree of magnetite deposition on the internal walls of the apertures, which influences the flow of the cooling liquid and thus the uniformity of the cooling of the partial fuel rods. Non-uniformity affects the maximum operational power at which the reactor can be operated. Based on the measurements, the degree of the necessity of aperture cleaning and subsequent cleaning control are determined.

The measurement by the method according to the invention is carried out in a shut-down reactor located in a service shaft where the reactor is flooded by water with the height of the water column at least 4 meters above the reactor to shield the high ionizing radiation. Workers are at least 4 meters above the water level, from where they perform service operations, for the purpose of their protection from the effects of ionizing radiation.

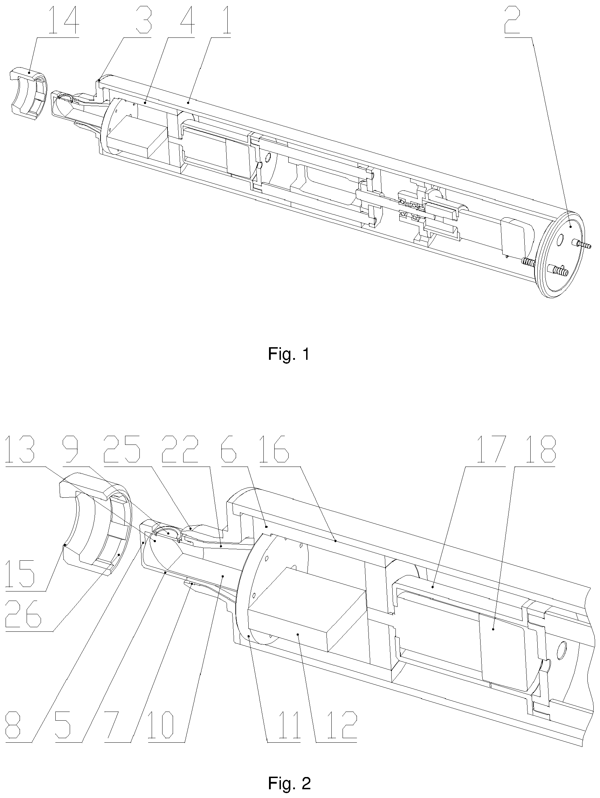

A scanning device is used for measuring the apertures 14 of the bottom of the VVER 440 nuclear reactor shaft in a service pit under water surface at a depth of 4 meters in a high ionizing radiation environment, which serves for a detailed scanning and measurement of the critical part of the apertures 14 of nominal diameter Ø50 H7. The device comprises a housing 1 of cylindrical shape which is closed in the rear portion by a rear cover 2 with an interface for manipulator attachment. In the front portion of the housing 1 there is a front cover 3 with a conical neck 25 with a hole from which the basic measuring head 4 extends as shown in Fig. 1 and 2.

The case of the basic measuring head 4 is formed by a cylinder 6 with larger diameter connected by a conical connecting link 22 with a cylinder 5 with smaller diameter. The cylinder 5 with smaller diameter is designed to be freely inserted into the measured hole, and its free end is closed by a seal 8 which forms the radiation absorbing layer. The cylinder 5 with smaller diameter includes a window 9 of radiation-resistant glass positioned perpendicular to the axis of rotation of the basic measuring head 4.

Within the basic measuring head 4 there is an optical assembly 10, which consists of a frame 11 of the optical assembly with a laser triangulation rangefinder 12 and a mirror 13 with a front reflection of the radiation-resistant glass.

The laser triangulation rangefinder 12 is located in the cylinder 6 with larger diameter so that the transmitted beam is directed parallel to the rotation axis towards the mirror 13 where it is reflected and directed through the window 9 out to the measured aperture area 15 from which it is reflected back. The reflection then passes back through the window 9 and impinges the mirror 13, from which it is reflected into the evaluation optics of the rangefinder 12.

Preferably, the mirror 13 is made of stainless steel. The position and orientation of the laser triangulation rangefinder 12 in the basic measuring head 4 prevents the direct impact of the ionizing radiation rays from the surroundings on the sensitive portions of the laser triangulation rangefinder 12. The radiation passes first through the absorption layer of the case of the basic measuring head 4 and of the housing 1_, subsequently through the air and only then into the laser triangulation rangefinder 12. This is a combination of protection by absorption layers and by distance from the ionizing radiation source.

The basic measuring head 4 is housed in the front portion of the housing 1, the internal cylindrical area thereof is also a sliding area of the housing 16 in which the basic measuring head 4 is rotated and longitudinally shifted. When fully extended, the basic measuring head 4 is closest to the internal portion of the front cover 3 and the window 9 is extended out of the housing 1 in its maximal reachable position. When fully inserted, the head is completely inside the housing 1 protected from mechanical damage during manipulation with the device.

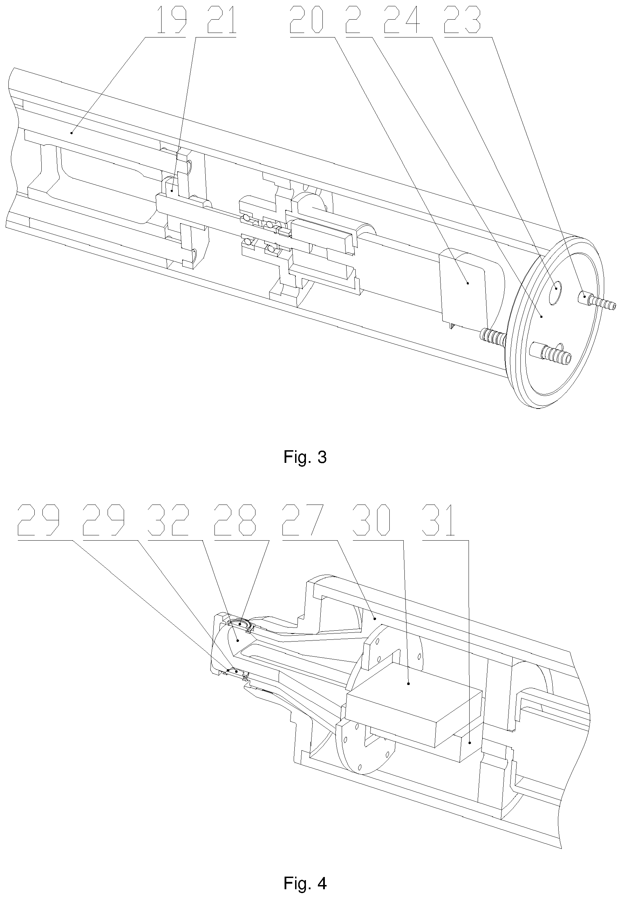

The basic measuring head 4 is connected with the means 17 for measuring head rotation which ensures complete rotation of the basic measuring head 4 around its rotation axis. The means 17 for measuring head rotation is driven by an electric motor 18 of the means for rotation. At the other end, the frame is connected to the means 19 for longitudinal shift which provides longitudinal shift of the assembly of means 17 for measuring head rotation together with the basic measuring head 4. The means 19 for longitudinal shift is driven by the electric motor 20 of the means for longitudinal shift and comprises a transmission 21, which converts rotational motion to a linear one. The rear cover 2 comprises inlet holes for threaded connection of a compressed gas or gas mixture feed 23, for example air, for levelling the pressure with the environment, and the cable passage 24 as shown in Fig. 3

The internal space of the housing 1 forms one airtight unit.

The movements of the basic measuring head 4 are controlled and the communication with the laser triangulation rangefinder 12 is realized by a control unit with a software which communicates with the operator's workplace. The operator's workplace software controls the measurement unit, saves and visualizes the measured data, evaluates the dimensions, generates reports, etc. The distances between the scanned surface and the rotation axis of the measuring head 4 are therefore processed by computer and preferably archived.

The actual measurement is initiated by placing the scanning device into the space of the aperture 14 so that the conical end of the neck 25 of the front cover rests on the conical outfall 26 of the measured aperture. This also results in the basic centering of the measuring device with the aperture 14 axis. Subsequently, the measurement is initiated and its aim is to capture the transition site of the bottom edge of the aperture 14. This determines the position of the critical portion area of the aperture 14. After finding the transition site, the basic measuring head 4 is slightly inserted back so that the laser beam covers the center of the area. Then, the scanning operation (rotational measurement) is initiated resulting in a set of measured distances for the partial rotation angles of the basic measuring head 4.

These distances are converted into actual radii by means of calibration curves. After scanning, the basic measuring head 4 is again inserted into the housing 1, which also protects her against mechanical damage during moving and transport.

The required data, such as maximum and minimum diameter, ovality, area, etc., are calculated from the measured data, and the visualization is performed. The critical area can also be measured over its entire width, thereby obtaining a 3D model of the portion of the aperture 14 in question.

Because of the unknown optical environment, the calibration is performed before the actual measurement. The device is inserted into the measured environment (is immersed in water) or optionally inserted into any aperture 14. The calibration procedure is then initiated, consisting of consecutive scanning of all three calibration diameters of the caliber. The procedure ends by inserting the basic measuring head 4 into the parking position. Subsequently, a set of measured distances corresponding to the radii of the individual gradient caliber diameters is determined from the scanned data for partial rotation angles of the basic measuring head 4. At the same time, the center of cross-section (coordinates of the cross-section area center of gravity) is determined for each calibration level. An individual correction equation of the dependence of the measured radius on the obtained value from the laser triangulation rangefinder 12 and the rotation angle of the optical assembly 10 is obtained for all set rotation angles of the optical assembly 10 by the approximation method, from the set of radii and known caliber dimensions. Moreover, the correction equation of the dependence of the basic measuring head 4 offset on the extent of its extension is determined from the coordinates of the centers of cross-sections of the measured cylindrical areas of the caliber.

A variation of the measuring head 27 with double optical assembly is shown in Fig. 4. In contrast to the basic measuring head 4, the measuring head 27 has two optical windows 9 rotated about 180° relative to each other, through which the laser beam of the two separate optical assemblies 10 passes. Within the measuring head 27 with double optical assembly is the frame 11 of the optical assembly with two laser triangulation rangefinders 12 and two mirrors 13. One pair of the laser triangulation rangefinder 12 with mirror 13 uses one window 9 and the other pair uses the second window 9. Each optical assembly 10 is calibrated and measured separately. The advantage of this solution is the increase of the scanning speed or optionally increase in the point density.

In another variation the integrated caliber 7 is replaced by a separate caliber which is not part of the device but is individually inserted into the liquid (the environment in which the measurement takes place) before calibration. Subsequently, the device is in the required position attached to the separate caliber and then the calibration takes place. The advantage is that a separate caliber can match the size and shape of the measured hole.

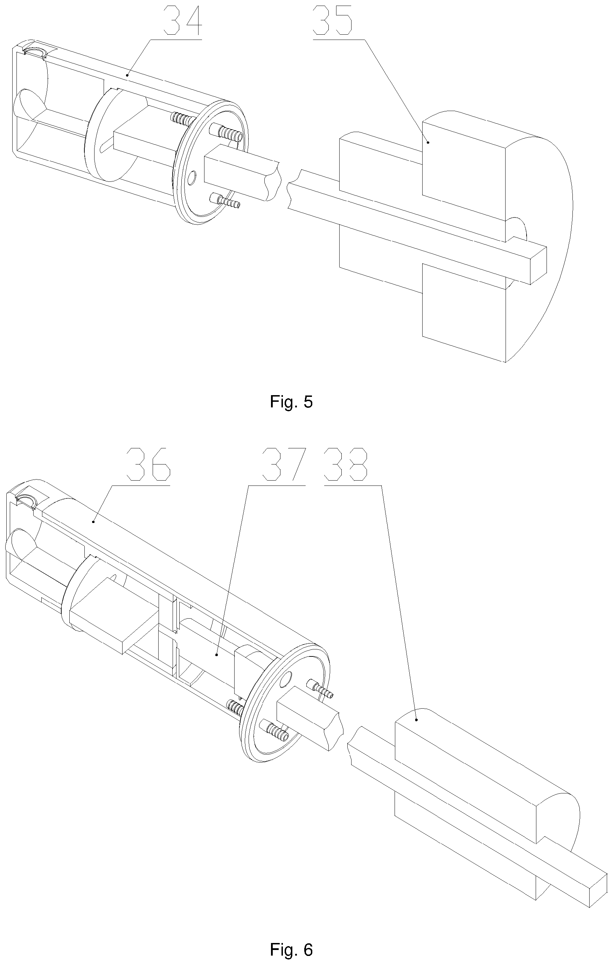

Fig. 5 illustrates another variation with a separate measuring head 34 and an external means 35 for rotation and longitudinal shift. In comparison with the basic variation, the measuring device is formed by the closed separate measuring head 34 which is attached to the external means 35 for rotation and longitudinal shift (e.g., a robotic arm). This device introduces the separate measuring head 34 into the hole, rotates and moves it along the axis of the hole. This variation is used for example primarily for scanning and measuring holes with diameters Ø 135-150. Calibration is carried out on a separate caliber.

Fig. 6 shows a variation of the rotating measuring head 36 with the integrated means 37 for rotation of the measuring head but with external means 38 for longitudinal shift. In comparison with the basic variation, the rotating measuring head 36 includes internally incorporated only integrated means 37 for rotation of the measuring head. The longitudinal shift is realized by the attached external means 38 for longitudinal shift which is attached to the rear cover. This device introduces the rotating measuring head 36 into the hole and moves it along the axis of the hole. This example is designed for scanning and measuring holes with diameter of Ø 150 - 160. Calibration is carried out on a separate caliber.

In another variation the means for rotation and longitudinal shift are hydraulically executed: by cylinder and feedback fluid motor. The advantage lies in smaller dimensions of the whole instrument and high resistance to ionizing radiation. The disadvantage is represented by higher price and the need for a hydroelectric generator.

In another variation the mechanical system of linear shift of the measuring head is realized by a pneumatic piston with linear metering.

All of these variations can be modified to measure holes of diameter range particularly from 30 mm to 2000 mm.

### Industrial Applicability

The method and device of the invention described above are primarily intended for measuring the profile and diameters of the throttling apertures under water but they can be used for any measurement of the hole profile below surface under the constraints given by the specific dimensions of the device, particularly the length of the measuring head extension. An example of use can be a precise inspection of mounting and anchoring holes in underwater structures or bolt holes, pins and bearings

### List of Reference Signs

- 1: - Housing
- 2: - Rear cover
- 3: - Front cover
- 4: - Basic measuring head
- 5: - Cylinder with smaller diameter
- 6: - Cylinder with larger diameter
- 7: - Integrated caliber
- 8: - Seal
- 9: - Window
- 10: - Optical assembly
- 11: - Optical assembly frame
- 12: - Laser triangulation rangefinder
- 13: - Mirror
- 14: - Aperture
- 15: - Measured aperture area
- 16: - Sliding area of housing
- 17: - Means for measuring head rotation
- 18: - Electric motor of means for rotation
- 19: - Means for longitudinal shift
- 20: - Electric motor of means for longitudinal shift
- 21: - Transmission
- 22: - Conical connecting link
- 23: - Compressed gas or gas mixture feed
- 24: - Cable passage
- 25: - Conical neck of the front cover
- 26: - Conical outfall of the measured aperture
- 27: - Measuring head with double optical assembly
- 28: - Optical window of the first optical assembly from radiation-resistant glass
- 29: - Optical window of the second optical assembly from radiation-resistant glass
- 30: - Laser rangefinder of the first optical assembly
- 31: - Laser rangefinder of the second optical assembly
- 32: - Front reflection mirror of the first optical assembly
- 33: - Front reflection mirror of the second optical assembly
- 34: - Separate measuring head
- 35: - External means for rotation and longitudinal shift
- 36: - Rotating measuring head
- 37: - Integrated means for rotation of the measuring head
- 38: - External means for longitudinal shift

## Claims

1. A method for measurement and analysis of circular holes in an ionizing radiation environment in a transparent liquid based on measurement of distance between a scanned surface and a rotation axis of a measuring head (4, 27, 34, 36) by laser triangulation method, wherein the internal profile of a hole or of a caliber is scanned point by point during the measuring head rotation with at least one optical assembly (10) rotating around its rotation axis and located in the hole, wherein the measuring head (4, 27, 34, 36) is inserted into the removable or integrated caliber (7) and calibrated, correction equations are calculated from the obtained referential data, the measuring head (4, 27, 34, 36) is then extended into the initial scanning position, the actual measurement by automatic point by point scanning takes place during the rotation of the measuring head to cover the entire internal area of the hole, thereby obtaining the scanned internal profile of the hole in a cross-section; after the scanning, the measuring head (4, 27, 34, 36) is inserted into a housing (1), the correction equations are applied to the measured data from which the distances between the scanned surface and the rotation axis of the measuring head are calculated, wherein the scanning device is impermeably sealed against liquids prior to calibration and measurement initiation, and immersed in the ambient liquid environment around the object hole, and a pressure equal to or higher than the pressure of the external ambient environment is maintained inside the housing (1) by pumped gas or mixture of gases.

2. The method for measurement and analysis of circular holes according to claim 1, **characterized in that** during the actual measurement by automatic point by point scanning during the rotation, the measuring head (4, 27, 34, 36) is at least once moved in the longitudinal shift and at least one other circular profile is scanned, or the scanning is executed along a spiral path.

3. The method for measurement and analysis of circular holes according to any one of the preceding claims, **characterized in that** the scanning device is immersed in a radioactive ambient liquid environment of a transparent liquid prior to the calibration and measurement initiation.

4. The method for measurement and analysis of circular holes according to any one of the preceding claims, **characterized in that** an ambient environment liquid rinse is performed immediately prior to the measurement and calibration initiation around the measuring head (4, 27, 34, 36).

5. The method for measurement and analysis of circular holes according to any one of the preceding claims, **characterized in that** the calibration is carried out in such a way that profiles of all, preferably three, measured caliber areas of different diameters are scanned by the rotating motion of the measuring head (4, 27, 34, 36) by means of a different depth of insertion of the measuring head (4, 27, 34, 36), wherein a set of measured distances which correspond to the radius of the individual gradient caliber diameters is obtained and/or a center of the cross-section is determined for each cross-section.

6. The method for measurement and analysis of circular holes according to any one of the preceding claims, **characterized in that** each optical assembly (10) is calibrated and measured separately in the measuring head (27) with double optical assembly, and both optical assemblies scan the opposite half of the circular cross-section at the same time.

## Patentansprüche

1. Ein Verfahren zur Messung und Analyse von runden Löchern in einer ionisierenden Strahlungsumgebung in einer transparenten Flüssigkeit basierend auf einer Abstandsmessung zwischen einer abgetasteten Oberfläche und einer Rotationsachse eines Messkopfes (4, 27, 34, 36) durch ein Lasertriangulationsverfahren, wobei das Innenprofil eines Lochs oder eines Kalibers während der Rotation des Messkopfes mit mindestens einem optischen Zusammenbau (10) punktweise abgetastet wird, der sich um seine Rotationsachse dreht und in dem Loch angeordnet ist, wobei der Messkopf (4, 27, 34, 36) in das entfernbare oder integrierte Kaliber (7) eingefügt und kalibriert wird, Korrekturgleichungen aus den gewonnenen Referenzdaten berechnet werden, der Messkopf (4, 27, 34, 36) dann in die Ausgangsabtastposition ausgefahren wird, die eigentliche Messung durch punktweise Abtastung während der Rotation des Messkopfes erfolgt, um den gesamten Innenbereich des Lochs abzudecken, wodurch das abgetastete Innenprofil des Lochs in einem Querschnitt erhalten wird; nach der Abtastung der Messkopf (4, 27, 34, 36) in ein Gehäuse (1) eingesetzt wird, die Korrekturgleichungen auf die Messdaten angewendet werden, aus denen die Abstände zwischen der abgetasteten Oberfläche und der Rotationsachse des Messkopfes berechnet werden, wobei die Abtasteinrichtung vor der Kalibrierung und der Messeinleitung dicht gegen Flüssigkeiten abgedichtet ist, und in die umhüllende Flüssigkeitsumgebung um das Objektloch eingetaucht wird, und innerhalb des Gehäuses (1) ein Druck aufrechterhalten wird, der gleich oder höher als der Druck der äußeren Umgebung durch Umpumpen von Gas oder Gasgemisch ist.

2. Das Verfahren zur Messung und Analyse von runden Löchern gemäß Anspruch 1, **dadurch gekennzeichnet, dass** während der eigentlichen Messung durch punktweise Abtastung während der Rotation, der Messkopf (4, 27, 34, 36) mindestens einmal in Längsverschiebung bewegt wird und mindestens ein weiteres Kreisprofil abgetastet wird, oder die Abtastung entlang einer Spiralbahn ausgeführt wird.

3. Das Verfahren zur Messung und Analyse von runden Löchern gemäß einer der vorhergehenden Ansprüche, **dadurch gekennzeichnet, dass** die Abtasteinrichtung vor der Kalibrierung und Messeinleitung in eine radioaktive umhüllende Flüssigkeitsumgebung einer transparenten Flüssigkeit eingetaucht wird.

4. Das Verfahren zur Messung und Analyse von runden Löchern gemäß einer der vorhergehenden Ansprüche, **dadurch gekennzeichnet, dass** unmittelbar vor der Messung und Kalibriereinleitung um den Messkopf (4, 27, 34, 36) herum eine umhüllende Flüssigkeitsspülung durchgeführt wird.

5. Das Verfahren zur Messung und Analyse von runden Löchern gemäß einer der vorhergehenden Ansprüche, **dadurch gekennzeichnet, dass** die Kalibrierung derart durchgeführt wird, dass Profile aller, vorzugsweise drei, gemessenen Kaliberbereiche unterschiedlichen Durchmessers durch die Rotationsbewegung des Messkopfes (4, 27, 34, 36) abgetastet werden mittels einer unterschiedlichen Eintauchtiefe des Messkopfes (4, 27, 34, 36), wobei ein Satz von gemessenen Abständen ermittelt wird, die dem Radius der einzelnen Gradientenkaliberdurchmesser entsprechen und/oder für jeden Querschnitt ein Mittelpunkt des Querschnitts ermittelt wird.

6. Das Verfahren zur Messung und Analyse von runden Löchern gemäß einer der vorhergehenden Ansprüche, **dadurch gekennzeichnet, dass** jeder optische Zusammenbau (10) in dem Messkopf (27) mit einer Doppeloptik separat kalibriert und vermessen wird, und beide optischen Zusammenbauten die gegenüberliegende Hälfte des kreisförmigen Querschnitts gleichzeitig abtasten.

## Revendications

1. Un procédé de mesure et d'analyse de trous circulaires dans un environnement de rayonnement ionisant dans un liquide transparent sur la base d'une mesure de distance entre une surface balayée et un axe de rotation d'une tête de mesure (4, 27, 34, 36) par un procédé de triangulation laser, où le profil interne d'un trou ou d'un calibre est balayée point par point pendant la rotation de la tête de mesure avec au moins un ensemble optique (10) tournant autour de son axe de rotation et situé dans le trou, où la tête de mesure (4, 27, 34, 36) est insérée dans le calibre amovible ou intégré (7) et calibrée, des équations de correction sont calculées à partir des données de référence obtenues, la tête de mesure (4, 27, 34, 36) est ensuite étendue dans la position de balayage initiale, la mesure réelle par balayage automatique point par point a lieu pendant la rotation de la tête de mesure pour couvrir toute la zone interne du trou, ce qui permet d'obtenir le profil interne balayé du trou dans une section transversale; après le balayage, la tête de mesure (4, 27 34, 36) est insérée dans un boîtier (1), les équations de correction sont appliquées aux données mesurées à partir desquelles les distances entre la surface balayée et l'axe de rotation de la tête de mesure sont calculées, où le dispositif de balayage est rendu étanche vis-à-vis des liquides avant la calibration et l'initiation de la mesure, et immergé dans l'environnement liquide ambiant autour du trou d'objet, et une pression égale ou supérieure à la pression de l'environnement ambiant extérieur est maintenue à l'intérieur du boîtier (1) par un gaz ou un mélange de gaz pompé.

2. Le procédé de mesure et d'analyse de trous circulaires selon la revendication 1, **caractérisé en ce que,** lors de la mesure réelle par balayage automatique point par point lors de la rotation, la tête de mesure (4, 27, 34, 36) est au moins une fois déplacée dans le décalage longitudinal et au moins un autre profil circulaire est balayé, ou le balayage est réalisé le long d'un trajet en spirale.

3. Le procédé de mesure et d'analyse de trous circulaires selon l'une quelconque des revendications précédentes, **caractérisé en ce que** le dispositif de balayage est immergé dans un environnement liquide ambiant radioactif d'un liquide transparent avant la calibration et l'initiation de la mesure.

4. Le procédé de mesure et d'analyse de trous circulaires selon l'une quelconque des revendications précédentes, **caractérisé en ce qu'**un rinçage liquide de l'environnement ambiant est effectué immédiatement avant la mesure et l'initiation de calibration autour de la tête de mesure (4, 27 34, 36).

5. Le procédé de mesure et d'analyse de trous circulaires selon l'une quelconque des revendications précédentes, **caractérisé en ce que** la calibration est réalisée de telle sorte que des profils de toutes, de préférence trois, des zones de calibre mesurées de différents diamètres sont balayées par le mouvement de rotation de la tête de mesure (4, 27, 34, 36) au moyen d'une profondeur d'insertion différente de la tête de mesure (4, 27, 34, 36), où un ensemble de distances mesurées correspondant au rayon des diamètres individuels de calibre de gradient est obtenu et/ou un centre de la section transversale est déterminé pour chaque section transversale.

6. Le procédé de mesure et d'analyse de trous circulaires selon l'une quelconque des revendications précédentes, **caractérisé en ce que** chaque ensemble optique (10) est calibré et mesuré séparément dans la tête de mesure (27) avec un double ensemble optique, et les deux ensembles optiques balayent la moitié opposée de la section transversale circulaire en même temps.
